# FASCICULE DE BREVET EUROPEEN

(11) **EP 2 209 677 B1**
(45) Date de publication et mention de la délivrance du brevet: **08.05.2013**
(21) Numéro de dépôt: 08851883.2
(22) Date de dépôt: 10.10.2008
(51) Int. Cl.: B60S 1/38

(54) **BALAI D'ESSUIE-GLACE**
WINDSCHUTZSCHEIBENWISCHERARM
WINDSCREEN WIPER ARM

(30) Priorité: 19.11.2007 FR 0708098
(43) Date de publication de la demande: 28.07.2010
(73) Titulaire: Valeo Systèmes d'Essuyage, 78321 La Verrière (FR)
(72) Inventeur: CERDAN, Jérôme, F-63570 Beaulieu (FR); PETITET, Gilles, F-63500 Issoire (FR); ANDRE-MASSE, Laurent, F-63500 Issoire (FR); OLLIER, Nicolas, F-43700 Arsac En Velay (FR)
(86) Numéro de dépôt international: PCT/EP2008/063598
(87) Numéro de publication internationale: WO 2009/065670

(56) Documents cités:
- EP-A- 0 012 251
- WO-A1-2009/000738
- DE-A1- 19 745 006
- DE-A1-102005 030 201
- GB-A- 710 360

## Description

La présente invention concerne un balai d'essuie-glace comprenant une lame d'essuyage et destiné à équiper un balai d'essuie-glace.

L'invention trouve une application particulièrement avantageuse, mais non exclusive, dans le domaine des balais , notamment des balais d'essuie-glace plats communément désignés par l'anglicisme « flat blades » et dont un exemple de réalisation est décrit dans la demande internationale n° W02007/000346.

Cette technologie « balai plat » consiste en un support en matériau plastique semi-rigide et flexible d'orientation longitudinale comportant, d'une part, une cavité dans laquelle est logée une tige de maintien généralement métallique, appelée également « vertèbre », et, d'autre part, un rail de maintien portant une lame d'essuyage en élastomère.

En général, la lame d'essuyage se présente sous la forme d'un profilé comprenant un talon solidaire de la structure support, une lèvre dont l'extrémité libre est destinée à coopérer par contact glissant avec toute surface à essuyer, ainsi qu'une partie intermédiaire reliant la lèvre au talon de façon articulée. Le talon constitue la partie la plus massive de la lame étant donné que son rôle est de servir d'interface avec la structure support du balai. La lèvre correspond quant à elle à la partie de la lame qui est chargée d'assurer la fonction d'essuyage, et c'est pourquoi elle présente fort logiquement une forme nettement plus effilée que le talon. Enfin, la partie intermédiaire est habituellement constituée par une portion de lame de moindre section, formant charnière.

Lors de l'assemblage de la lame d'essuyage dans la structure support du balai d'essuie-glace, le talon de la lame est inséré par coulissement dans le rail de maintien. Du fait de cet assemblage, il est nécessaire d'avoir un jeu fonctionnel entre le talon de la lame d'essuyage et le rail de maintien de la structure support.

Au cours de la mise en oeuvre d'un mécanisme d'essuie-glace présentant deux bras porte-balai, chaque bras porte-balai décrit un mouvement de pivotement alternatif permettant d'entraîner le balai d'essuyage qui lui est associé, dans un mouvement de balayage. Dans la pratique, la mobilité de chaque bras porte-balai s'exerce entre deux positions angulaires extrêmes, qui sont communément appelées "arrêt fixe" et "opposé arrêt fixe".

Lorsqu'un bras porte-balai arrive en fin de course, et ce quelle que soit la position extrême considérée, la lame caoutchouc du balai doit se retourner pour préserver son efficacité. On sait en effet que la qualité d'essuyage d'un balai est maximale dès lors que sa lame est orientée vers l'arrière par rapport au sens de déplacement du bras porte-balai. Il est par conséquent essentiel que cette disposition relative perdure une fois la direction de déplacement du bras porte-balai inversée.

Ce phénomène de retournement présente toutefois l'inconvénient d'être particulièrement bruyant. En effet, il consiste schématiquement en un relèvement progressif du bras porte-balai permettant le retournement de la lame d'essuyage et suivi d'une chute beaucoup plus brutale de ce dernier. Cela génère inévitablement un bruit de claquement au niveau de la lame elle-même mais également au niveau du talon de la lame d'essuyage lorsqu'il rentre en contact avec la structure support.

Ce bruit s'avère, dans la pratique, parfaitement perceptible, même depuis l'intérieur d'un habitacle fermé de véhicule automobile.

Une solution développée pour réduire les différents problèmes de nuisances sonores consiste à utiliser pour la lame du balai d'essuyage, un élastomère disposant de propriétés amortissantes élevées, et/ou à réduire la hauteur de lèvre de ladite lame.

Mais dans la pratique, il s'avère malheureusement que les élastomères amortissants présentent aussi la particularité d'être peu résilients, ce qui est tout à fait contre-indiqué pour remplir efficacement la fonction essuyage, et ce qui conduit par ailleurs à des retournements plus laborieux.

La réduction de la hauteur de lèvre, qui permet de réduire le bruit au retournement, induit quant à elle le plus souvent l'apparition de défauts d'essuyage.

Les techniques précédemment cités ne permettent pas à elles seules et dans tous les cas de mettre fin au bruit de retournement.

C'est notamment le cas, lorsqu'il existe un jeu fonctionnel entre le talon de la lame d'essuyage et le rail de maintien de la structure support car toutes les technique précédemment décrites n'ont aucune action sur cette zone particulière de contact entre la lame et la structure support.

Une technique, destinée à éviter, lors du retournement, les bruits dus au déplacement de la lame dans la structure support, revient à optimiser au mieux la forme de son profil. Cette optimisation vise en particulier à éviter les interactions entre la lame et la structure support. Le document EP0942857 A1 propose d'intégrer des éléments amortisseurs dans le talon de la lame d'essuyage de sorte à amortir les contacts entre le talon de la lame et la structure support lors du retournement de la lame.

Cette solution, bien que fort ingénieuse, présente des difficultés de mise en oeuvre lors de l'assemblage longitudinal de la lame d'essuyage et de la structure support. Ceci est notamment dû au fait qu'en présence des éléments amortisseurs, le volume du talon de la lame d'essuyage devient alors supérieur au volume qui lui est dédié dans la structure support.

Par ailleurs, même en utilisant une force supérieure pour l'introduction du talon dans la zone dédiée de la structure support, la déformation élastique lors de l'introduction a pour effet d'augmenter la longueur de la lame générant des contraintes et des tensions résiduelles importantes en terme de traction.

Il n'est donc pas souhaitable d'utiliser la solution précédemment décrite. WO-A-2009/000738 montre un autre état de la technique.

Aussi, le problème technique à résoudre par l'objet de la présente invention, est de proposer une solution, qui tout en respectant le volume dédié au talon de la lame d'essuyage dans le rail de maintien permet de rendre moins perceptible le bruit induit par le déplacement du talon dans le rail de maintien.

La solution au problème technique posé consiste, selon la présente invention, à éviter les contact entre les surfaces planes du talon et du rail de maintien par utilisation de moyens formant point de contact entre deux surfaces planes appartenant au rail de maintien et au talon au niveau de leur zone de contact.

Ces moyens permettent ainsi d'éviter les contact plan sur plan ce qui a pour effet de changer la gamme de fréquence des bruits éventuellement générés. Ce changement de gamme de fréquence permet de rendre le bruit généré « moins audible » ou non perceptible par l'utilisateur.

Ces moyens sont réalisés sous la forme de bossages agencés selon l'un des axes longitudinale ou transversal du balai d'essuie-glace soit au niveau du talon de la lame d'essuyage soit au niveau du rail de maintien lui-même.

Différents modes de réalisation des bossages sont possibles tout en faisant attention de ne pas aboutir de nouveau à un contact plan sur plan.

En complément de ce moyens formant point de contact entre deux surfaces planes précitées , des moyens de verrouillage de la rotation du talon dans le rail de maintien sont également prévus en vu de réduire encore les bruits dus aux chocs se produisant lors du déplacement relatif du talon de la lame d'essuyage par rapport au rail de maintien.

Le verrouillage au moins partielle du talon dans la structure support à pour effet d'éliminer ou au moins de réduire le bruit de retournement dû à la rotation du talon dans la structure support lors du retournement de la lame d'essuyage.

De façon tout a fait avantageuse, ces moyens de verrouillages réalisés sous la forme de moyens de compression comprennent au moins une griffe de verrouillage disposée au niveau de la partie intermédiaire de la lame d'essuyage et prenant appui sur le rail de maintien de la structure support. Cette disposition permet d'éviter toute interaction avec les moyens formant zone de contact objet de l'invention de sorte qu'il est possible de cumuler les bénéfices de ces deux dispositifs.

Il est important de souligner que l'invention est applicable à tout type de balai d'essuie-glace, qu'il s'agisse d'un balai classique à palonniers ou d'un balai plat de nouvelle génération. Il est également entendu que l'invention ne tient pas compte de la forme et/ou des dimensions de la lame d'essuyage, ce qui accroît encore davantage les possibilités d'application.

L'invention telle qu'ainsi définie présente l'avantage d'être particulièrement facile à fabriquer, notamment lors de la réalisation de la lame d'essuyage par procédé d'extrusion ou de co-extrusion.

Quoi qu'il en soit, le principe de la solution proposée consiste, tout en conservant un jeu fonctionnel nécessaire à l'assemblage, entre le talon et le rail de maintien, à éviter les chocs induits par ce jeu fonctionnel lors du retournement.

C'est ainsi qu'au final par application de cette solution de évitant les contacts plan sur plan entre le talon de la lame d'essuyage et le rail de maintien, en complément d'autres solutions visant par exemple la sélection du matériau pour son effet amortisseur et/ou son coefficient de frottement, on obtient une diminution significative du bruit de retournement de la lame lors des phases d'inversion du sens de déplacement du bras porte-balai.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux figures 1 à 4 annexées. Les figures 1 à 4 sont des coupes transversales dans lesquelles :

La figure 1 illustre un balai d'essuie-glace conforme à un premier exemple de réalisation de l'invention.

La figure 2 est une représentation partielle du balai d'essuie-glace de la figure 1 selon un second mode de réalisation.

La figure 3 est une variante de la vue de la figure 2.

La figure 4 est une seconde variante de la vue de la figure 2.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

De même, pour la description de l'invention, on adoptera à titre non limitatif les orientations verticale, longitudinale et transversale selon le repère V, L, T indiqué aux figures.

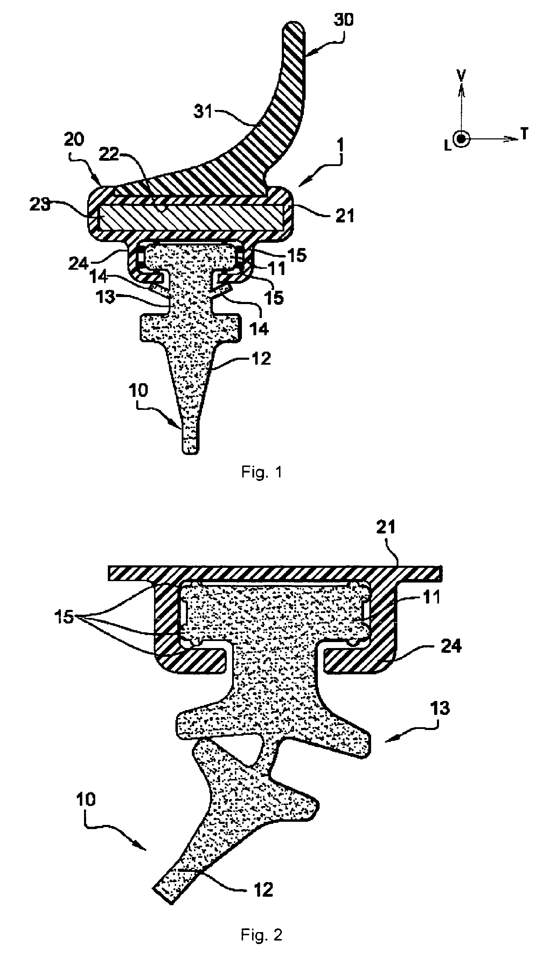

La figure 1 illustre un balai d'essuie-glace 1 qui dans ce mode particulier de réalisation, choisi uniquement à titre d'exemple, est de type flat blade. On retrouve donc essentiellement une lame d'essuyage 10, ici en position de repos, en matériau souple, qui est supportée par une structure flexible 20. On remarque également la présence d'un déflecteur aérodynamique 30 qui est chargé d'optimiser les performances aérodynamiques du balai 1.

Dans le détail, la lame d'essuyage 10 est constituée par un profilé en élastomère, qui est principalement composé d'un talon 11 et d'une lèvre 12 articulés entre eux par une partie intermédiaire 13 de moindre section, formant charnière 13a. La structure support 20 se présente quant à elle sous la forme d'un profilé en plastique 21 qui intègre un logement interne 22 dans lequel est inséré une vertèbre métallique 23. La structure support 20 comprend également un rail de maintien 24 dans lequel prend place le talon 11 de la lame d'essuyage 10. Enfin, le déflecteur 30 est lui aussi constitué par un profilé 31, mais celui-ci est réalisé en élastomère et il est solidarisé à la partie supérieure du profilé 21.

Conformément à l'objet de la présente invention, le balai d'essuie-glace 1 comprend des moyens 15 formant point de contact entre les deux surfaces planes formées par l'intérieur du rail de maintien 24 et le contour extérieur du talon 11.

Dans l'exemple de la figure 1, ces moyens 15 formant point de contact sont réalisés sous la forme de bossages 15 arrondis agencés sur la surface intérieure du rail de maintien 24 de la structure support 20.

Ces bossages sont réalisés le long de l'axe longitudinal L du balai d'essuie-glace.

Les bossages 15 se présentent sous la forme de demi sphères mais on peut envisager d'autres formes telles que par exemple des demi sphères aplaties.

Dans le cas présent, les bossages présent un dimensionnement de l'ordre du dixième de mm de hauteur et de l'ordre de 15 dixièmes de mm de diamètre, mais cela ne reste qu'un exemple de dimensionnement possible.

Comme cela est visible sur la représentation de la figure 1, les bossages 15 sont positionnés sur les surfaces d'orientation verticale V et sur les surfaces horizontales d'orientation transversales T du rail de maintien 24.

Bien évidemment, pour des raisons pratiques de fabrication, on peut envisager de n'avoir des bossages 15 que selon une orientation donnée, verticale V ou horizontale (selon l'orientation transversale T) représentée.

Différents modes de réalisation des bossages sont possibles tout en faisant attention de ne pas aboutir de nouveau à un contact plan sur plan.

Les bossages 15 peuvent être réalisés de manière continue ou discontinue le long de l'axe longitudinal ou selon l'axe transversal du talon tout en conservant leur fonctionnalité.

La figure 2 est une vue partielle du balai d'essuie-glace de la figure 1 dans laquelle les bossages 15 ne sont pas agencés sur le rail de maintien 24 mais directement sur le talon 11 de la lame d'essuyage 10. Sur cette représentation les bossages sont réalisées à la fois sur les surfaces verticales et horizontale de manière à ce qu'il n'y ait plus de contact entre deux surfaces planes entre le talon 11 et le rail de maintient 24 après insertion du talon dans le rail de maintien.

Dans ce mode de réalisation, les bossages 15 sont venus de matière avec le talon 11 et font donc partie intégrante de la lame d'essuyage 10.

La lame d'essuyage 10 et les bossages qu'elle intègre sur son talon 11 peuvent être réalisés par extrusion ou par moulage.

Selon un autre mode de réalisation, les bossages 15 peuvent être réalisés par coextrusion avec la lame d'essuyage 10.

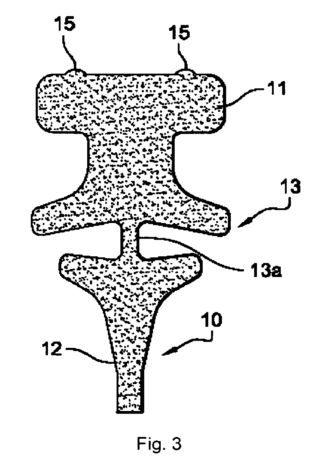

Par ailleurs, comme précédemment prévu et tel que visible sur la figure 3 présentant une variante de la figure 2, les bossages 15 peuvent n'être prévus que sur certaines surfaces, notamment celles qui sont susceptibles d'être le plus en contact plan sur plan avec le rail de maintien 24. Sur la figure 3, seuls deux bossages 15 sont prévus sur la surface supérieure du talon 11.

Dans le cas de réalisation de la lame par moulage, il peut être prévu de ne faire des bossages 15 que sur certaines surfaces pour des questions techniques liées au démoulage

Ces bossages 15, même s'ils ne permettent pas une réduction d'énergie lors du retournement de la lame d'essuyage 10 mais permettent d'éviter les contacts plan sur plan entre le talon et le rail de maintien.

L'utilisation des bossages 15 a pour effet, même si cela n'évite pas la rotation du talon 11 dans le rail de maintien, de déplacer la gamme sonore des bruits générés vers une gamme de fréquence moins perceptible pour les utilisateurs.

Par ailleurs, il est connu, dans les technologies de balais d'essuie-glace d'avoir des balais d'essuie-glace dont la lame peut être changée lorsque celle-ci est usée ou abîmée. Ces balais à lame remplaçable rendent nécessaire de pouvoir remplacer aisément la lame d'essuyage. Notamment l'utilisateur doit pouvoir remplacer lui-même la lame d'essuyage sans utiliser d'outil particulier.

L'utilisation de bossages 15 est très intéressante dans le cadre de balais d'essuie-glace à lame remplaçable car ils permettent d'avoir moins de frottement lors du démontage de la lame usagée et du montage de la nouvelle lame. Le montage et le démontage s'en trouvent ainsi facilités.

De la même manière, pour les balais d'essuie-glace à lame non remplaçable, la mise en place de la lame d'essuyage dans la structure support par coulissement est plus aisée.

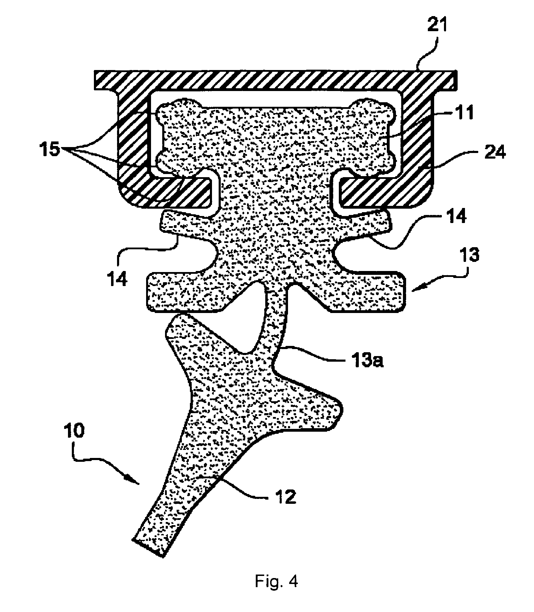

Il faut mentionner que dans le cadre de la figure 4, les bossages 15 réalisés sur les parois verticales du talon résultent d'un creusure du talon au niveau de sa paroi verticale entre les deux coins présentant arrondis du talon 11.

L'idée de la solution proposée est de rendre moins perceptible le bruit induit par le déplacement du talon dans le rail de maintien, en évitant les contact entre surfaces planes du talon et du rail.

Cette solution permet de conserver le jeu fonctionnel entre le talon 11 et le rail de maintien 24 , jeu qui est nécessaire pour le montage de la lame 10 dans la structure support 20.

En complément, et comme visible sur les figures 1 et 4, la lame d'essuyage 10 présente au niveau de la partie intermédiaire 13 des moyens de verrouillage 14 pour verrouiller, au moins partiellement, le talon 11 dans le rail de maintien 24.

Ces moyens de verrouillage 14 sont efficaces et permettent diminuer significativement la vitesse de rotation du talon 11 dans le rail de maintien 24 ou de bloquer totalement cette rotation de sorte que les bruits dus aux chocs liés à la rotation sont fortement réduits.

Dans le cas présent, les moyens de verrouillage sont réalisés sous la forme de moyens de compression 14 disposés à l extérieur du rail de maintien 24 s'appuyant sur l'extérieur de ce dernier.

De manière plus précise et comme le montre la figure 1, les moyens de compression sont des griffes 14, issues de la lame d'essuyage, s'étendant de la partie intermédiaire 13 et venant s'appuyer sur la partie inférieure de rail de maintien à l'extérieure de celui-ci. Comme représenté les griffes 14 sont inclinées.

Les griffes 14 présentent une rigidité suffisante pour permettre de diminuer significativement la vitesse de rotation du talon dans le rail de maintien ou de bloquer totalement le talon 11 dans le rail de maintien 24. Néanmoins, au-delà d'une certaine force d'application, elles présentent un caractère amortisseur qui évite toute détérioration de la lame et du balai d'essuyage.

Sur la figure 4, on visualise plus précisément, l'effet des griffes 14 de verrouillage sur la rotation du talon 11 dans le rail de maintien 24. En effet, dans cette représentation dans laquelle on voit que la lame est en position d'essuyage puisque la lèvre 12 n'est plus disposé selon l'axe de symétrie de la lame d'essuyage 10, on observe que le talon 11 de la lame 10 est dans une position sensiblement identique à la position du talon 11 dans le cadre de la figure 1 dans laquelle la lame 10 est en position de repos. On constate ainsi, qu'en présence des griffes 14, le talon n'a pratiquement pas bougé et donc n'a pas subi de rotation entre le passage de la lame d'essuyage 10 de la position de repos (figure 1) à la position d'essuyage (figure 4).

On conçoit donc assez clairement que le passage de la première position d'essuyage à la seconde position d'essuyage suite au retournement de la lame ne génèrera pas de rotation supplémentaire du talon 11 de la lame d'essuyage 10 dans le rail de maintien 24.

Les griffes 14 sont réalisées par extrusion avec l'ensemble de la lame d'essuyage 10 de sorte que les griffes sont issues de matière avec la lame d'essuyage, mais, selon une autre possibilité, notamment si l'on veut avoir des griffes 14 de rigidité plus importante que celle de la lame d'essuyage 10, il est prévu de réaliser les griffes 14 par co-extrusion avec la lame d'essuyage 10.

Il est également possible de réaliser les griffes 14 directement par moulage lorsque la lame d'essuyage est réalisée par une technologie de moulage. Dans ce cas, pour des questions techniques dues au démoulage, les griffes 14 sont réalisées sous la forme de griffes s'étendant horizontalement.

Dans le cas de balais d'essuie-glace à lame remplaçable, la présence des griffes 14 de verrouillage ne doit pas être un frein à ce remplacement et dans ce cas, il peut être nécessaire de prévoir que les griffes 14 de verrouillage présentent une rigidité moindre dans le cas de lames d'essuyage pour balais à lames remplaçables.

Ainsi, pour les lames d'essuyage destinées à des balais à lames non remplaçables, les griffes pourront présenter une rigidité plus importante que pour les lames d'essuyage destinées à des balais à lames remplaçables.

De manière générale, la présence des griffes permet un assemblage sans exercer d'effort sur la lame par rapport aux solutions de l'art antérieur.

Le verrouillage du talon 11 dans le rail de maintien 24 permet donc d'éviter, malgré le jeu fonctionnel existant entre le talon et le rail de maintien, que le talon ne bouge lors du retournement de la lame d'essuyage. Ainsi, on évite au maximum les déplacements du talon 11 dans le rail de maintien 24 et les bruits de chocs liés à ces déplacements.

Bien entendu, l'invention concerne plus largement tout dispositif d'essuyage comportant le balai d'essuie-glace pourvu des moyens formant point de contact entre le talon de la lame d'essuyage et le rail de maintien de la structure support tel que décrit précédemment.

## Revendications

1. Balai d'essuie-glace (1) comprenant une structure support (20) et une lame d'essuyage (10), dans lequel,
- ladite lame d'essuyage (10) comporte une lèvre d'essuyage (12) et un talon (11) reliés ensemble par une partie intermédiaire (13), et
- la structure support (20) comporte, d'une part, une cavité (22) dans laquelle est logée une tige de maintien (23) et, d'autre part, un rail de maintien (24) destiné à recevoir le talon (11) de la lame d'essuyage (10), **caractérisé en ce que** le balai d'essuie-glace comprend des moyens (15) formant point de contact entre deux surfaces planes appartenant au rail de maintien (24) et au talon (11) au niveau de leur zone de contact et **en ce que** les moyens (15) formant point de contact sont réalisés sous la forme d'au moins un bossage.

2. Balai d'essuie-glace (1) selon la revendication 1 **caractérisé en ce que** les moyens (15) formant point de contact sont réalisés le long de l'axe longitudinal (L) du balai d'essuie-glace (1).

3. Balai d'essuie-glace (1) selon la revendication 1 **caractérisé en ce que** les moyens (15) formant point de contact sont réalisés le long de l'axe transversal (T) du balai d'essuie-glace (1).

4. Balai d'essuie-glace (1) selon l'une quelconque des revendications 1 à 3 **caractérisé en ce que** les moyens (15) formant point de contact sont réalisés de manière continue le long de l'axe longitudinal (L) du balai d'essuie-glace (1).

5. Balai d'essuie-glace (1) selon l'une quelconque des revendications 1 à 3 **caractérisé en ce que** les moyens (15) formant point de contact sont réalisés manière discontinue le long de l'axe longitudinal (L) du balai d'essuie-glace (1).

6. Balai d'essuie-glace (1) selon l'une quelconque des revendications 1 à 5 **caractérisé en ce que** les moyens (15) formant point de contact sont agencés sur des surfaces d'orientation différentes (V, T).

7. Balai d'essuie-glace (1) selon l'une quelconque des revendications 1 à 6 **caractérisé en ce que** les moyens (15) formant point de contact sont agencés sur le talon (11) de la lame d'essuyage (10).

8. Balai d'essuie-glace (1) selon l'une quelconque des revendications 1 à 6 **caractérisé en ce que** les moyens (15) formant point de contact sont agencés sur la surface intérieure du rail de maintien (24).

9. Dispositif d'essuyage **caractérisé en ce qu'**il comprend un balai d'essuie-glace selon l'une quelconque des revendications 1 à 8.

## Patentansprüche

1. Scheibenwischerarm (1), umfassend eine Tragstruktur (20) und ein Wischerblatt (10), bei dem
- das Wischerblatt (10) eine Wischlippe (12) und einen Schaft (11) umfasst, die durch einen Zwischenteil (13) miteinander verbunden sind, und
- die Tragstruktur (20) einerseits einen Hohlraum (22), in dem eine Haltestange (23) angeordnet ist, und andererseits eine Halteschiene (24) umfasst, die dazu bestimmt ist, den Schaft (11) des Wischerblattes (10) aufzunehmen,
**dadurch gekennzeichnet, dass** der Scheibenwischerarm Mittel (15) umfasst, die einen Kontaktpunkt zwischen zwei ebenen Flächen, die der Halteschiene (24) und dem Schaft (11) angehören, im Bereich ihrer Kontaktzone bilden,
und dass die den Kontaktpunkt bildenden Mittel (15) in Form mindestens eines Wulstes ausgeführt sind.

2. Scheibenwischerarm (1) nach Anspruch 1, **dadurch gekennzeichnet, dass** die den Kontaktpunkt bildenden Mittel (15) entlang der Längsachse (L) des Scheibenwischerarms (1) ausgeführt sind.

3. Scheibenwischerarm (1) nach Anspruch 1, **dadurch gekennzeichnet, dass** die den Kontaktpunkt bildenden Mittel (15) entlang der Querachse (T) des Scheibenwischerarms (1) ausgeführt sind.

4. Scheibenwischerarm (1) nach einem der Ansprüche 1 bis 3, **dadurch gekennzeichnet, dass** die den Kontaktpunkt bildenden Mittel (15) durchgehend entlang der Längsachse (L) des Scheibenwischerarms (1) ausgeführt sind.

5. Scheibenwischerarm (1) nach einem der Ansprüche 1 bis 3, **dadurch gekennzeichnet, dass** die den Kontaktpunkt (15) bildenden Mittel nicht durchgehend entlang der Längsachse (L) des Scheibenwischerarms (1) ausgeführt sind.

6. Scheibenwischerarm (1) nach einem der Ansprüche 1 bis 5, **dadurch gekennzeichnet, dass** die den Kontaktpunkt bildenden Mittel (15) auf Flächen unterschiedlicher Ausrichtungen (V, T) angeordnet sind.

7. Scheibenwischerarm (1) nach einem der Ansprüche 1 bis 6, **dadurch gekennzeichnet, dass** die den Kontaktpunkt bildenden Mittel (15) auf dem Schaft (11) des Wischerblattes (10) angeordnet sind.

8. Scheibenwischerarm (1) nach einem der Ansprüche 1 bis 6, **dadurch gekennzeichnet, dass** die den Kontaktpunkt bildenden Mittel (15) auf der Innenfläche der Halteschiene (24) angeordnet sind.

9. Wischvorrichtung, **dadurch gekennzeichnet, dass** sie einen Scheibenwischerarm nach einem der Ansprüche 1 bis 8 umfasst.

## Claims

1. A wiper blade (1) comprising a support structure (20) and a wiper rubber (10), in which
- the said wiper rubber (10) comprises a wiping lip (12) and a base (11) connected together by an intermediate part (13), and
- the support structure (20) comprises firstly a cavity (22) in which a holding rod (23) is housed and secondly a holding rail (24) intended to receive the base (11) of the wiper rubber (10),
**characterised in that** the wiper blade comprises means (15) forming a point of contact between two flat surfaces belonging to the holding rail (24) and the base (11) at their contact area and **in that** the means (15) forming the point of contact are produced in the form of at least one protrusion.

2. A wiper blade (1) according to claim 1, **characterised in that** the means (15) forming the point of contact are produced along the longitudinal axis (L) of the wiper blade (1).

3. A wiper blade (1) according to claim 1, **characterised in that** the means (15) forming the point of contact are produced along the transverse axis (T) of the wiper blade (1).

4. A wiper blade (1) according to any one of claims 1 to 3, **characterised in that** the means (15) forming the point of contact are produced continuously along the longitudinal axis (L) of the wiper blade (1).

5. A wiper blade (1) according to any one of claims 1 to 3, **characterised in that** the means (15) forming the point of contact are produced discontinuously along the longitudinal axis (L) of the wiper blade (1).

6. A wiper blade (1) according to any one of claims 1 to 5, **characterised in that** the means (15) forming the point of contact are arranged on surfaces with different orientations (V, T).

7. A wiper blade (1) according to any one of claims 1 to 6, **characterised in that** the means (15) forming the point of contact are arranged on the base (11) of the wiper rubber (10) .

8. A wiper blade (1) according to any one of claims 1 to 6, **characterised in that** the means (15) forming the point of contact are arranged on the internal surface of the holding rail (24).

9. A wiping device **characterised in that** it comprises a wiper blade according to any one of claims 1 to 8.
